(19) Europäisches Patentamt
European Patent Office
Office européen des brevets

(11) **EP 2 733 881 A1**

(12) **EUROPEAN PATENT APPLICATION**

(43) Date of publication:
**21.05.2014 Bulletin 2014/21**

(51) Int Cl.:
***H04L 1/00*** *(2006.01)*          ***H04L 1/18*** *(2006.01)*

(21) Application number: **12306422.2**

(22) Date of filing: **15.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Alcatel Lucent**
  **75007 Paris (FR)**
- **Universität Bremen**
  **28359 Bremen (DE)**

(72) Inventors:
- **Lang, Yidong**
  **28329 Bremen (DE)**
- **Wuebben, Dirk**
  **28357 Bremen (DE)**

- **Dekorsy, Armin**
  **28357 Bremen (DE)**
- **Braun, Volker**
  **70176 Stuttgart (DE)**
- **Doetsch, Uwe**
  **74392 Freudental (DE)**

(74) Representative: **Hofmann, Dirk et al**
**Alcatel-Lucent Deutschland AG**
**Intellectual Property & Standards**
**Lorenzstrasse 10**
**70435 Stuttgart (DE)**

Remarks:
Amended claims in accordance with Rule 137(2) EPC.

(54)    **Transmission method, transmitter apparatus, reception method and receiver apparatus for a joint transmission of first data units and at least second data units**

(57)    The embodiments of the invention relate to a transmission method (MET-TA) and transmitter apparatus (TA) for a joint transmission of first data units and at least second data units in a communication system. The first data units are applied for a transmission with respect to a first initial transmission of a first data volume and the at least second data units are applied for a transmission with respect to a second initial transmission of at least a second data volume. The transmission method (MET-TA) contains the steps of superimposing (M1/1) the first data units with the at least second data units for obtaining superimposed third data units, interleaving (M1/2) the superimposed third data units for obtaining interleaved and superimposed third data units, encoding (M1/3) the interleaved and superimposed third data units for obtaining encoded, interleaved and superimposed third data units, and transmitting (M1/4) the encoded, interleaved and superimposed third data units. The embodiments of the invention further relate to a reception method (MET-RA) and a receiver apparatus (RA). The reception method contains the step of receiving (M1/5) encoded, interleaved and superimposed third data units, decoding (M1/6) the encoded, interleaved and superimposed third data units for obtaining interleaved and superimposed third data units, de-interleaving (M1/7) the interleaved and superimposed third data units for obtaining superimposed first data units and at least second data units, performing a joint decoding (M1/9) of the superimposed third data units and of data units of the first initial transmission or of the at least second initial transmission for recovering error-free the first data volume, and/or performing a joint decoding (M1/10) of the superimposed third data units and of data units of the first initial transmission or the at least second initial transmission for recovering error-free the at least second data volume.

EP 2 733 881 A1

FIG. 6

**Description**

**FIELD OF THE INVENTION**

Embodiments of the invention relate to communication systems and, more particularly but not exclusively, to retransmission in a radio communication system.

**BACKGROUND**

When a data volume such as a data packet is transmitted initially by radio frequency signals from a first transceiver apparatus via a transmission channel such as a wireless transmission channel to a second transceiver apparatus, several effects such as scattering, fading and/or power decay usually have an impact on the transmitted signal at a location of the second transceiver apparatus and therefore, modified radio frequency signals are received by the second transceiver apparatus so that the second transceiver apparatus may not be able to recover error-free the data packet by a single transmission. For solving this problem, several retransmission techniques with one or several further retransmissions from the first transceiver apparatus to the second transceiver apparatus have been developed.

HARQ (HARQ = hybrid automatic repeat request) with chase combining or incremental redundancy is widely used in modern packet based wireless communication systems such as UMTS systems (UMTS = Universal Mobile Telecommunication Systems), HSPA systems (HSPA = High Speed Packet Access) or LTE systems (LTE = Long Term Evolution). HARQ is used in these systems in conjunction with adaptive modulation and coding so as to compensate for transmission errors caused by imperfect link adaptation. Imperfect link adaptation causes significant throughput degradation as compared to the theoretical limits, despite of using HARQ. With HARQ, typically a CRC check (CRC = Cyclic Redundancy Check) is performed at the second transceiver apparatus upon reception of a first transmission of an encoded data packet and the result of the CRC check, PASS or FAIL, is reported to the first transceiver apparatus as an ACK (ACK = acknowledgement) or a NACK (NACK = Negative Acknowledgement), respectively. In case of NACK, the first transceiver apparatus performs a retransmission of the data packet to the second transceiver apparatus and soft combining of the codewords of the received first transmission and the received retransmission is performed by the second transceiver apparatus before the decoding. Soft combining improves error rate performance as compared to simply discarding the first transmission attempt at the second transceiver apparatus.

With chase combining the retransmission uses the same codeword size and same RV parameters (RV = redundancy version), i.e. puncturing patterns, as the first transmission. By applying common incremental redundancy, the retransmission uses a different puncturing pattern than in the first transmission. When using an advanced incremental redundancy, only a subset of the information bits or none of the information bits of the first transmission and only different parity bits than of the first transmission are sent by the retransmission for consuming less radio link capacity.

In network coded transmission schemes, a joint retransmission is performed by superimposing bit streams of two erroneously received initial transmissions for reducing data traffic with respect to single retransmissions.

**SUMMARY**

Throughput performance is a critical issue in wireless communication, because a radio link is usually a bottleneck for a transmission of data from a mobile station to a further mobile station or to a network node somewhere in the world. Thus, one object of the embodiments of the invention is to increase the throughput performance of radio links.

The object is achieved by a transmission method, a transmitter apparatus, a reception method and a receiver apparatus for a joint transmission of first data units and at least second data units in a communication system. The first data units may be applied for a transmission with respect to a first initial transmission of a first data volume and the at least second data units may be applied for a transmission with respect to a second initial transmission of at least a second data volume.

The transmission method contains the steps of superimposing the first data units with the at least second data units for obtaining superimposed third data units, interleaving the superimposed third data units for obtaining interleaved and superimposed third data units, encoding the interleaved and superimposed third data units for obtaining encoded, interleaved and superimposed third data units, and transmitting the encoded, interleaved and superimposed third data units for example by a radio frequency transmission via a wireless link or by an electrical transmission via an electrical cable or by an optical transmission via an optical fibre.

The reception method contains the step of receiving the encoded, interleaved and superimposed third data units, which have been generated by superimposing the first data units with the at least second data units, by interleaving the superimposed third data units and by encoding the interleaved and superimposed third data units. The reception method further contains the steps of decoding the encoded, interleaved and superimposed third data units for obtaining the interleaved and superimposed third data units, de-interleaving the interleaved and superimposed third data units for obtaining the superimposed third data units, performing a joint decoding of the superimposed third data units and of data units of the first initial transmission or of the at least second initial transmission for recovering error-free the first data volume of the first initial transmission, and/or performing a joint decoding of the superimposed third data units and of data units of the first initial transmission or of the at least second initial transmission for recovering error-free the at least second data volume of the at least second initial transmission.

The first data volume and the at least second data volume may be for example at least two data packets or at least two payloads such as IPv4 packets (IPv4 = Internet Protocol version 4) or IPv6 packets (IPv6 = Internet Protocol version 6), data frames such as LTE radio frames, Ethernet packets, so-called transport blocks such as LTE transport blocks or sub-frames such as LTE sub-frames. The first data units may be part of the first data volume and the at least second data units may be part of the second data volume such as further redundancy versions for the first data volume and the at least second data volume and may be generated for example by puncturing half of bits of the first data volume and half of bits of the at least second data volume.

The superimposing may be for example a bit-wise modulo-2 addition of bits of the first data units and of bits of the at least second data units. The modulo-2 addition may be also called an XOR operation (XOR = Exclusive or). According to an alternative embodiment, the superimposing may be a complex valued addition of modulation symbols such as QPSK symbols, 16QAM symbols etc.

The communication system may be for example a radio communication system based on radio links, an optical communication system based on optical fibres or an fixed line communication based on electrical cables such as coaxial cables.

The radio communication system may be for example a cellular radio communication system based on LTE, LTE Advanced, UMTS, HSPA, CDMA2000 (CDMA = Code Division Multiple Access), GSM/GPRS (GSM = Global System for Mobile Communication, GPRS = General Packet Radio Service), WiMAX (WiMAX = Worldwide Interoperability for Microwave Access) or a WLAN (WLAN = Wireless Local Area Network) based for example on one of the IEEE 802.11 standards.

The embodiments of the invention provide the benefit of a higher possibility for successful data recovery at a receiver apparatus based on the superimposing and the interleaving. Thereby, a data throughput on radio links can be increased and wireless spectrum efficiency can be enhanced.

The transmitter apparatus contains means for superimposing the first data units with the at least second data units for obtaining the superimposed third data units. In embodiments, the means for superimposing the first data units with the at least second data units may correspond to any superimposing unit such as a modulo-2 adder, an XOR operating module, or a generic block encoder such as a parity check or Hamming encoder. Hence, in embodiments, the means for superimposing may contain a first input for the first data units and at least a second input for the at least second data units, an algorithmic unit for performing the superimposing of the first data units and the at least second data units for obtaining the superimposed third data units, a memory having storage space for performing the superimposing, and an output for the superimposed third data units. In some embodiments the means for superimposing can be implemented in terms of a computer program and a hardware component on which the computer program is executed, such as a DSP (DSP = Digital Signal Processor) or any other processor.

The transmitter apparatus further contains means for interleaving the superimposed third data units for obtaining the interleaved and superimposed third data units. In embodiments, the means for interleaving the third data units may correspond to any interleaving unit, such as a shift register, a block interleaver (e.g. a matrix is filled row by row and read-out column by column), a convolutional interleaver, or a pseudo-random interleaver. Hence, in embodiments, the means for interleaving may contain an input for the superimposed third data units, an algorithmic unit for performing the interleaving of the superimposed third data units for obtaining the interleaved and superimposed third data units, a memory having storage space for performing the interleaving, and an output for the interleaved and superimposed third data units. In some embodiments the means for interleaving can be implemented in terms of a computer program and a hardware component on which the computer program is executed, such as a DSP or any other processor.

The transmitter apparatus further contains means for encoding the interleaved and superimposed third data units for obtaining the encoded, interleaved and superimposed third data units. In embodiments, the means for encoding the interleaved and superimposed third data units may correspond to any encoding unit, such as a so-called Turbo encoder, a so-called Fountain encoder, a so-called Raptor encoder, an LDPC encoder (LDPC = low-density parity-check), a convolution encoder, or a block encoder. Hence, in embodiments the means for encoding may contain an input for the interleaved and superimposed third data units, an algorithmic unit for performing the encoding of the interleaved and superimposed third data units for obtaining the encoded, interleaved and superimposed third data units, a memory having storage space for performing the encoding, and an output for the encoded, interleaved and superimposed third data units. In preferred embodiments, the encoding unit may contain a rate matching functionality based on puncturing or repetitions for matching a size of the encoded, interleaved and superimposed third data units to a size of a radio resource unit. In some embodiments the means for encoding can be implemented in terms of a computer program and a hardware component on which the computer program is executed, such as a DSP or any other processor.

The transmitter apparatus further contains means for transmitting the encoded, interleaved and superimposed third data units by the radio frequency signal to a receiver apparatus. In embodiments, the means for transmitting may correspond to any transmitter, such as a transmitter complying with one of the above-described radio communication systems or standards. Hence, in embodiments, the means for transmitting may further contain typical components of a transmitter, such as a power amplifier, filtering means, antennas, etc. In further embodiments, the transmitter may even contain a mixer for converting a transmit signal from a base band to a transmission band, a preamplifier, etc.

In a preferred embodiment, the transmission method may further contain the step of interleaving the first data units with a first permutation and/or the at least second data units with a second permutation before the superimposing step. This provides the advantage of enhanced randomization of the data units which in turn can improve throughput performance. This provides the further advantage of increased Hamming weights for the subsequent encoding step. Therefore, the transmitter apparatus may further contain means for interleaving the first data units for obtaining interleaved first data units and/or means for interleaving the at least second data units for obtaining interleaved second data units. In embodiments, the means for interleaving the first data units and/or the means for interleaving the at least second data units may correspond to any interleaving unit, such as a shift register or a block interleaver (e.g. a matrix is filled row by row and read-out column by column) or a permutation function. Hence, in embodiments, the means for interleaving may contain an input for the first data units and/or the second data units, an algorithmic unit for performing the interleaving of the first data units for obtaining the interleaved first data units and/or the interleaving of the at least second data units for obtaining the interleaved at least second data units, a memory having storage space for performing the interleaving, and an output for the interleaved first data units and/or the interleaved at least second data units. In some embodiments the means for interleaving can be implemented in terms of a computer program and a hardware component on which the computer program is executed, such as a DSP or any other processor.

The receiver apparatus contains means for receiving the encoded, interleaved and superimposed third data units, which have been generated by superimposing the first data units with the at least second data units, by interleaving the superimposed third data units and by encoding the interleaved and superimposed third data units. The means for receiving may be implemented as a receiver unit. The means for receiving can be operable to receive a receive signal in terms of one or more receive symbols. In embodiments the means for receiving may correspond to any receiver, for example, a receiver compliant to one of the above communication systems or communication standards. The receiver may contain typical receiver components, such as receive antennas, low-noise amplifiers, filter circuits or filter means, etc. In further embodiments, the receiver may even contain a mixer for converting a receive signal or symbol from a transmission band to a base band and according base band processing means. For example, the receiver may comprise a DSP for processing receive symbols in the base band, after they have been down-converted from the transmission band and digitized.

The receiver apparatus further contains means for decoding the encoded, interleaved and superimposed third data units for obtaining the interleaved and superimposed third data units. In embodiments, the means for decoding the encoded, interleaved and superimposed third data units may correspond to any decoding unit, such as a so-called Turbo decoder, a so-called Fountain decoder, a so-called Raptor decoder, a so-called LDPC decoder, a convolution decoder, or a block decoder. Hence, in embodiments the means for decoding may contain an input for the encoded, interleaved and superimposed third data units, an algorithmic unit for performing the decoding of the encoded, interleaved and superimposed third data units for obtaining the interleaved and superimposed third data units, a memory having storage space for performing the decoding, and an output for the interleaved and superimposed third data units. In some embodiments the means for decoding can be implemented in terms of a computer program and a hardware component on which the computer program is executed, such as a DSP or any other processor.

The receiver apparatus further contains means for de-interleaving the interleaved and superimposed third data units for obtaining the superimposed third data units. In embodiments, the means for de-interleaving the interleaved and superimposed third data units may correspond to any de-interleaving unit, such as an inverse shift register, an inverse block interleaver or an inverse permutation function. Hence, in embodiments, the means for de-interleaving may contain an input for the interleaved and superimposed third data units, an algorithmic unit for performing the de-interleaving of the interleaved and superimposed third data units for obtaining the superimposed third data units, a memory having storage space for performing the de-interleaving, and an output for the superimposed third data units. In some embodiments the means for de-interleaving can be implemented in terms of a computer program and a hardware component on which the computer program is executed, such as a DSP or any other processor.

The receiver apparatus further contains means for performing the joint decoding of the superimposed third data units and of the data units of the first initial transmission or of the at least second initial transmission for recovering error-free a first data volume of the first initial transmission, and/or for performing the joint decoding of the superimposed third data units and the data units of the first initial transmission or of the at least second initial transmission for recovering error-free at least the second data volume of the at least second initial transmission. In embodiments, the means for performing a joint decoding may correspond to any joint decoding unit such as a combination of a boxplus operation function and a decoding unit such as an iterative turbo decoder. Hence, in embodiments, the means for performing the joint decoding may contain an input for the superimposed third data units, an algorithmic unit for performing the joint decoding of the superimposed third data units and of the data units of the first initial transmission or the at least second initial transmission for recovering error-free the first data volume of the first initial transmission and/or for performing the joint decoding of the superimposed third data units and of the data units of the first initial transmission or of the at least second initial transmission for recovering error-free the at least second data volume of the at least second initial transmission, a memory having storage space for performing the joint decoding, and an output for the first data volume and the at least second data volume. In some embodiments the means for performing the joint decoding can be implemented in terms of a computer program and a hardware component on which the computer program is executed, such as a DSP or any other processor.

The embodiments may be implemented in various wireless transmission scenarios. In a first scenario for a network coded retransmission between the transmitter apparatus and the receiver apparatus of for example two HARQ processes, the first initial transmission may be erroneously received at the receiver apparatus, the at least second initial transmission may be erroneously received at the receiver apparatus and the encoded, interleaved and superimposed third data units may be transmitted to the receiver apparatus. In a first alternative for the network coded retransmission, a base station may contain the transmitter apparatus and a mobile station may contain the receiver apparatus. In a second alternative for the network coded retransmission, a mobile station station may contain the transmitter apparatus and a base station may contain the receiver apparatus.

In a second scenario for a two-way relay, the first initial transmission may be provided by a first network node, the at least second initial transmission may be provided by at least a second network node, the first initial transmission and the at least second initial transmission may be error-free received at a relay network node, and the encoded, interleaved and superimposed third data units may be transmitted from the relay network node to the first network node for an error-free decoding of the at least second data volume at the first network node and to the at least second network node for an error-free decoding of the first data volume at the at least second network node.

In a third scenario for a multi user ARQ (ARQ = automatic repeat request), a base station may contain the transmitter apparatus and a first mobile station and at least a second mobile station each may contain the receiver apparatus. In such a case, the first initial transmission may be erroneously received at the first mobile station, the at least second initial transmission may erroneously received at the at least second mobile station and the encoded, interleaved and superimposed third data units may be transmitted from the base station to the first mobile station and the at least second mobile station.

In a fourth scenario for a cooperative uplink relay, the first initial transmission may be provided by a first network node such as a first mobile station, the at least second initial transmission may be provided by the first network node or by at least a second network node such as a second mobile station, the first initial transmission and the at least second initial transmission may be erroneously received at a third network node such as a base station, the first initial transmission and the at least second initial transmission may be error-free received at a relay network node, and the encoded, interleaved and superimposed third data units may be transmitted from the relay network node to the third network node.

Further advantageous features of the embodiments of the invention are defined and are described in the following detailed description.

**BRIEF DESCRIPTION OF THE FIGURES**

The embodiments of the invention will become apparent in the following detailed description and will be illustrated by accompanying figures given by way of non-limiting illustrations.

Figure 1 shows schematically a block diagram of a transmitter apparatus according to a first embodiment of the invention.

Figure 2 shows schematically a block diagram of a further transmitter apparatus according to a second embodiment of the invention.

Figure 3 shows schematically a block diagram of a receiver apparatus according to the embodiments of the invention.

Figure 4 shows schematically a flow diagram of a method according to the embodiments of the invention.

Figure 5 shows schematically a flow diagram of a communication method between a base station and a mobile station according to a first implementation of the embodiments of the invention.

Figure 6 shows schematically a flow diagram of a communication method between a base station and two mobile stations based according to a second implementation of the embodiments of the invention.

Figure 7 shows schematically a flow diagram of a communication method between two mobile stations and a base station via a relay network node according to a third implementation of the embodiments of the invention.

Figure 8 shows schematically a flow diagram of a communication method between a first mobile station and a second mobile station via a relay network node according to a fourth implementation of the embodiments of the invention.

## DESCRIPTION OF THE EMBODIMENTS

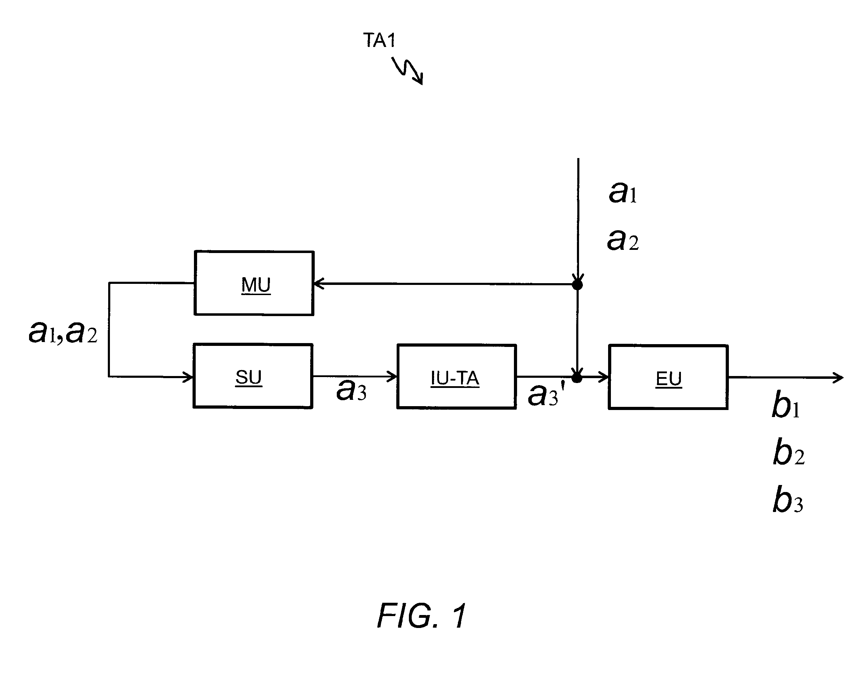

Figure 1 shows exemplarily an extract of a transmitter apparatus TA1 for use in a radio network node such as a base station, a mobile station or a relay network node. According to an alternative embodiment, the transmitter apparatus TA may be applied in a network node for optical transmissions via optical fibres or in a network node for electrical transmission via cables such as coaxial cables.

The term "base station" may be considered synonymous to and/or referred to as a base transceiver station, base station, Node B, enhanced Node B, access point etc. and may describe equipment that provides connectivity via a radio link between the radio communication system RCS and one or more mobile stations. The term "radio cell" is considered synonymous to and/or is referred to as radio cell, cell, radio sector, sector etc.

The term "mobile station" may be considered synonymous to, and may hereafter be occasionally referred to, as a mobile unit, mobile station, mobile user, access terminal, user equipment, subscriber, user, remote station etc. The mobile station may be for example cellular telephones, portable computers, pocket computers, hand-held computers, personal digital assistants, USB flash drives with a radio interface or car-mounted mobile devices.

The term "relay network node" may be considered synonymous to, and may hereafter be occasionally referred to, as a relay node, relay, relay station, relay transmitter, repeater etc.

During a first HARQ process first data units of a first data volume such as a first information vector $a_1$ are provided to an encoding unit EU and are buffered for a potential retransmission in a memory unit MU. An information vector $a_i$ may be given for example by following equation:

$$a_i \in \mathbb{F}_2^{N_a} = \left\{ \left( a_{i,1}, 1 \right), \left( a_{i,2}, 2 \right), \dots \left( a_{i,j}, j \right), \dots, \left( a_{i,N_a}, N_a \right) \right\} \qquad (0)$$

where:

$a_{i,j}$: bit of the information vector $a_i$ at bit position $j$,

$N_a$: number of bits of the information vector $a_i$,

$\mathbb{F}_2^{N_a}$: a binary vector with a length of $N_a$.

The memory unit MU may be preferably a volatile memory such as a DRAM (DRAM = Dynamic Random-Access Memory) or a fast CPU cache memory such as a SRAM (SRAM = Static Random-Access Memory). The first information vector $a_1$ may contain for example first digital information bits for a first initial transmission of for example a first data packet such as an IPv4 packet or an IPv6 packet, a first data frame such as an LTE radio frame, a first Ethernet packet, a so-called first transport block such as an LTE transport block or a first sub-frame such as an LTE sub-frame. The encoding unit EU may be any encoder known to a person skilled in the art such as a so-called Turbo encoder such as described for example in C. Berrou, A. Glavieux, P. Thitimajshima, "Near Shannon limit error-correcting coding and decoding: Turbo-codes. 1," IEEE International Conference on Communications, 1993 (ICC 93), pp.1064-1070 vol.2, 23-26 May 1993. In further alternatives, the encoding unit EU may be a so-called Fountain encoder, a so-called Raptor encoder, an LDPC encoder (LDPC = low-density parity-check), a convolution encoder, or a block encoder. The encoding unit EU generates from the first information vector $a_1$ an encoded first code vector $b_1 \in \mathbb{F}_2^{N_b}$ (with $\mathbb{F}_2^{N_b}$ being a further binary vector with a length of $N_b$ and $N_b$ being a number of bits of the first code vector $b_1$) such as described for example in 3GPP TS 36.212 V9.2.0 "Multiplexing and Channel Coding", section 5.1.3.2, June 2010 by applying for example a parallel concatenation of two recursive convolutional codes for example with a code rate $R = \frac{N_a}{N_b} = \frac{1}{3}$.

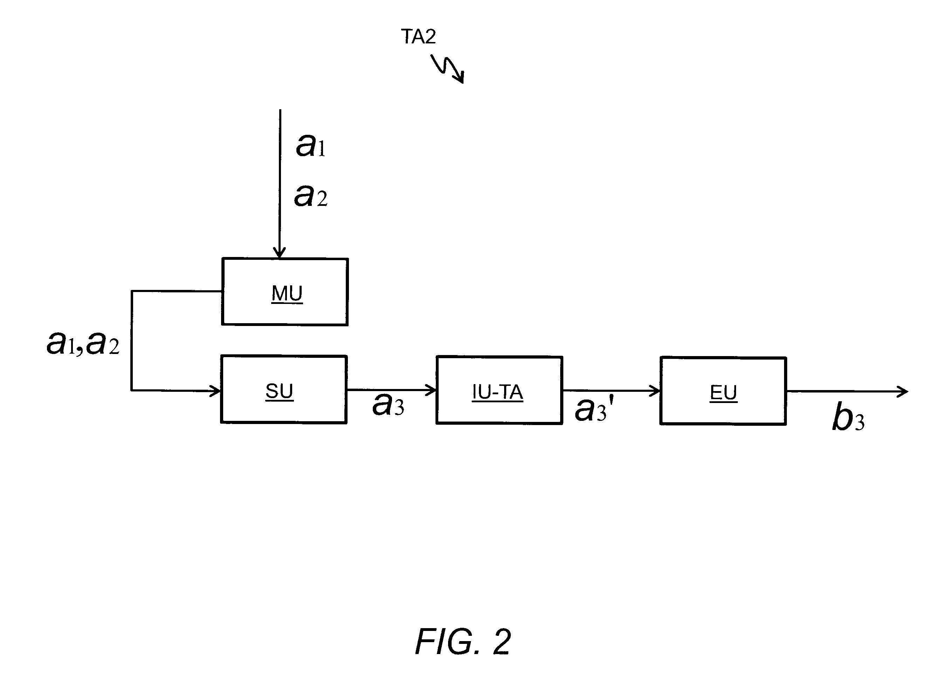

Further processing steps with respect to the first code vector $b_1$ within the transmitter apparatus TA1 such as rate-matching for obtaining a rate-matched first code vector $c_1 \in \mathbb{F}_2^{N_c}$ (with $\mathbb{F}_2^{N_c}$ being an even further binary vector with a length of $N_c$ and $N_c$ being a number of bits of the rate-matched first code vector $c_1$), mapping several of code bits $c_{1,m}$ of the rate-matched first code vector $c_1$ to a first symbol and further several of the code bits $c_{1,m}$ to further first symbols $x_{1,n} \in X$ such as complex-valued modulation symbols of a modulation alphabet X such as QPSK (QPSK = Quadrature Phase Shift Keying), 16-QAM (QAM = Quadrature Amplitude Modulation) or 64-QAM and transmitting the first symbols $x_{1,n}$ to a receiver apparatus (see Figure 2) are not shown for simplification. The first symbols $x_{1,n}$ contain the rate-matched and encoded first data units. A current transport format and redundancy version may determine a rate matching such as an LTE rate matching. An effective code rate is given by $R_c = \frac{N_a}{N_c}$.

During a second HARQ process second data units of a second data volume such as a second information vector $a_2 \in \mathbb{F}_2^{N_a}$ (it is presumed that the first information vector $a_1$ and the second information vector $a_2$ have the same number of bits; alternatively the first information vector $a_1$ and the second information vector $a_2$ may have different number of bits and a shorter one of the information vectors $a_1$, $a_2$ will be padded for example with zero bits before the superimposing step) are provided to the encoding unit EU and are buffered for a potential retransmission in the memory unit MU. The second information vector $a_2$ may contain for example second information bits for a second initial transmission of for example a second data packet, a second data frame, a second Ethernet packet, a second transport block or a second sub-frame. The encoding unit EU generates from the second information vector $a_2$ an second code vector $b_2 \in \mathbb{F}_2^{N_b}$. Further processing steps of the second code vector $b_2$ within the transmitter apparatus TA1 such as rate-matching for obtaining a rate-matched second code vector $c_2 \in \mathbb{F}_2^{N_c}$, mapping several of code bits $c_{2,m}$ of the rate-matched second information vector $c_2$ to a second symbol and further several of the code bits $c_{2,m}$ to further second symbols $x_{2,n} \in X$ of the modulation alphabet X and transmitting the second symbols $x_{2,n}$ to the receiver apparatus or a further receiver apparatus (see Figure 2) are not shown for simplification. The second symbols $x_{2,n}$ contain the rate-matched and encoded second data units. When the first information vector $a_1$ and the second information vector $a_2$ are not correctly decoded and recovered at the receiver apparatus or when the first information vector $a_1$ is not correctly decoded and recovered at the receiver apparatus and the second information vector $a_2$ is not correctly decoded and recovered at the further receiver apparatus and the transmitter apparatus TA1 obtains information of such failed decoding and recovery by receiving corresponding NACK messages or by not receiving corresponding ACK messages within a predefined time such as one or several milliseconds after initial transmission for the first information vector $a_1$ and the second information vector $a_2$ the transmitter apparatus TA1 may retrieve the first information vector $a_1$ and the second information vector $a_2$ according to the so-called and well-known principle of chase combining from the memory unit MU and provides the first information vector $a_1$ and the second information vector $a_2$ to a superimposing unit SU such as a modulo-2 adder or an XOR operating module.

According to an alternative, a further redundancy version vector $a_1^*$ different to the first information vector $a_1$ and a further redundancy version vector $a_2^*$ different to the second information vector $a_2$ by selecting corresponding puncturing patterns may be provided to the superimposing unit SU. This means that the joint retransmission contains different redundancy versions with respect to the initial transmissions.

The following description will be only given for the case of chase combining. A skilled person must be able to adapt the following description also to the case of incremental redundancy.

The superimposing unit SU may generate superimposed third data units of a third information vector $a_3 \in \mathbb{F}_2^{N_a}$ according to following equation:

$$a_3 = a_1 \oplus a_2 , \quad (1)$$

where $\oplus$ denotes modulo-2 addition. The third information vector $a_3$ provides redundancy to the first information vector $a_1$ and to the second information vector $a_2$ can be viewed as a single-parity check code product code or a serial concatenated code consisting of a horizontal code (e.g. Turbo code) and a vertical code (e.g. parity check code defined by equation (1)).

The third information vector $a_3$ is further provided to an interleaving unit IU-TA such as a shift register, a block interleaver (e.g. a matrix is filled row by row and read-out column by column), a convolutional interleaver, a 3GPP Turbo code internal interleaver such as described in TS 36.212 V9.2.0 "Multiplexing and Channel Coding", section 5.1.3.2.3 Turbo code internal interleaver, June 2010 or a pseudo-random interleaver. The interleaving unit IU-TA may generate interleaved and superimposed third data units of a further third information vector $a_3$' according to following equation:

$$a_3' = \pi(a_3) \quad (2)$$

where $\pi()$ is an interleaving function applied on the network coded information bits in order to increase the Hamming weight for the further turbo encoding. The further third information vector $a_3$' is further provided to the encoding unit EU. The encoding unit EU generates encoded, interleaved and superimposed third data units of a third code vector $b_3$. The encoding unit EU may be based for example on a horizontal encoder such as an LTE encoder with a 1/3 rate. The third code vector $b_3$ can be viewed as a product code or a serial concatenated code consisting of a horizontal code (e.g. Turbo code) and a vertical code (e.g. parity check code defined by equation (1)).

Further processing steps of the third code vector $b_3$ within the transmitter apparatus TA1 such as rate-matching for obtaining a rate-matched third code vector $c_3 \in \mathbb{F}_2^{N_c}$, mapping several of code bits $c_{3,m}$ of the rate-matched third code vector $c_3$ to a third symbol and further several of the code bits $c_{3,m}$ to further third symbols $x_{3,n} \in X$ of the modulation alphabet X and transmitting the third symbols $x_{3,n}$ to the receiver apparatus or transmitting the third symbols $x_{3,n}$ to the receiver apparatus and the further receiver apparatus are not shown for simplification. The third symbols $x_{3,n}$ contain the encoded, interleaved and superimposed third data units. According to a further embodiment, a length of the rate-matched third code vector $c_3$ may be different to a length of the rate-matched first code vector $c_1$ and the rate-matched second code vector $c_2$. The transmitter apparatus TA1 allows combining any two erroneously received data volumes belonging to different HARQ processes in a flexible way.

According to various alternatives, the first information vector $a_1$, the second information vector $a_2$ and the further third information vector $a_3$' may be encoded by the same encoder unit EU or the first informaton vector $a_1$ may be encoded by a further encoder unit, the second information vector $a_2$ may be encoded by an even further encoder unit and the further third information vector $a_3$' may be encoded by the encoder unit EU. Alternatively, the first information vector $a_1$, the second information vector $a_2$ and the further third information vector $a_3$' may be encoded by same convolutional codes or by different convolutional codes.

According to further alternatives, three information vectors of three HARQ processes or more than three information vectors of more than three HARQ processes may be superimposed by the superimposing unit SU and further processed within the transmitter apparatus TA1.

Figure 2 shows exemplarily an extract of a further transmitter apparatus TA2 for use in a radio network node such as a relay network node. In comparison to the transmitter apparatus TA1 of Figure 1 the transmitter apparatus TA2 of Figure 2 may be adapted to provide only the joint retransmission but not the initial transmissions of the first HARQ process and the second HARQ process. Therefore, the transmitter apparatus TA2 may receive error-free decoded and recovered copies of the first information vector $a_1$ and of the second information vector $a_2$ from a receiver apparatus, which has received the first symbols and the second symbols and which may be preferably located in a same network as the transmitter apparatus TA2. The copies of the first information vector $a_1$ and of the second information vector $a_2$

are provided to the memory unit MU for a potential retransmission. When the transmitter apparatus TA2 obtains the information, that the first information vector $a_1$ and the second information vector $a_2$ are not correctly decoded and recovered at the receiver apparatus or that the first information vector $a_1$ is not correctly decoded and recovered at the receiver apparatus and the second information vector $a_2$ is not correctly decoded and recovered at the further receiver apparatus, the transmitter apparatus TA2 retrieves the first information vector $a_1$ and the second information vector $a_2$ from the memory unit MU and provides the first information vector $a_1$ and the second information vector $a_2$ to the superimposing unit SU. If the transmitter apparatus TA2 is located in a relay network node, the relay network node may directly receive corresponding NACK messages or may not directly receive corresponding ACK messages within a predefined time for detecting failed initial transmissions of the first information vector $a_1$ and the second information vector $a_2$. Alternatively, if the NACK messages or ACK messages are not directly send to the relay network node as a selected receiver, the relay network node may eavesdrop corresponding messages to detect the failed initial transmissions of the first information vector $a_1$ and the second information vector $a_2$.

The further processing within the transmitter apparatus TA2 may be identical to the further processing within the transmitter apparatus TA1.

According to further alternatives, the transmitter apparatus TA1 and the transmitter apparatus TA2 may be amended in such a way, that a further interleaving unit may be applied in a signal processing path between the memory unit MU and the superimposing unit SU (not shown in Figure 1 and Figure 2 for simplification). Thereby, the first information vector $a_1$ may be interleaved with a first permutation and the second information vector $a_2$ may be interleaved with a second permutation using for example a permutation according to equation (2) or one of the alternatives described with respect to the equation (2). Alternatively, only the first information vector $a_1$ or the second information vector $a_2$ may be interleaved with a single permutation.

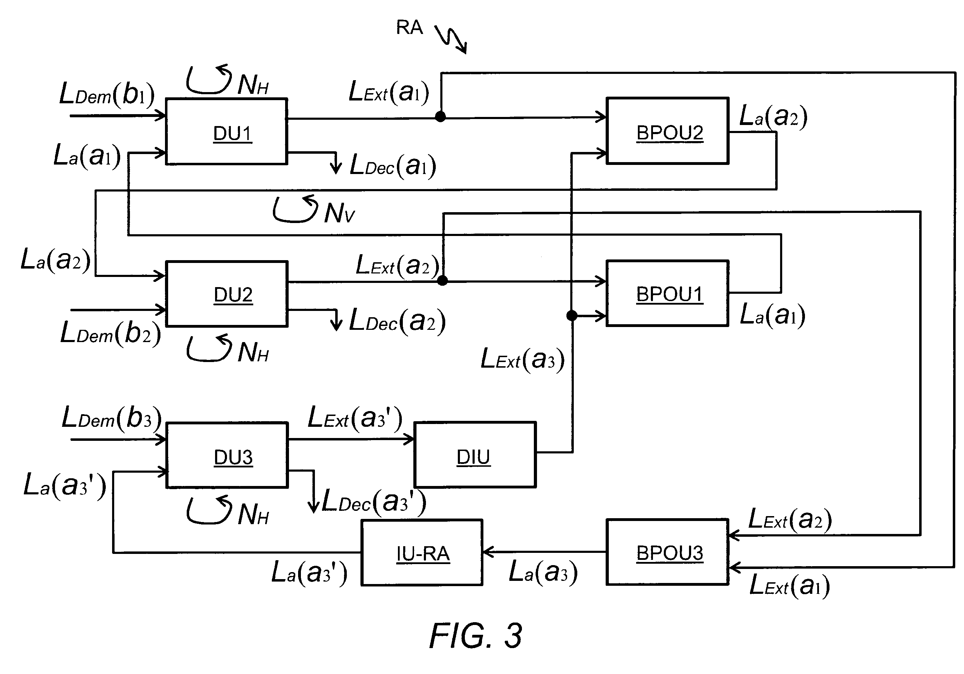

Figure 3 shows exemplarily an extract of a receiver apparatus RA for use in a radio network node such as a base station, a mobile station or a relay network node. According to an alternative embodiment, the receiver apparatus RA may be applied in a network node for optical transmissions via optical fibres.

A received signal vector may be given by following equation:

$$y_i = h_i x_i + n_i \qquad (3)$$

where:

$n_i$: noise vector, whose elements may be identically distributed (i.i.d.) zero-mean Gaussian random variables with

variance $\sigma_n^2$,

$h_i, \forall i$: channel coefficients, obtained in the receiver apparatus RA by means of channel estimation algorithms, e.g. based on received pilot symbols.

$x_i$: complex valued modulation symbols as transmitted.

A soft demapper unit such as described in J. Hagenauer, "Soft is better than Hard", Communications, Coding and Cryptology, vol. 1, pp. 155-171, 1994 and which is not shown in Figure 3 for simplification may be applied to calculate a first LLR vector (LLR = Log-Likelihood-Ratio) $L_{Dem}(c_1)$ for the rate-matched first code vector $c_1$, a second LLR vector $L_{Dem}(c_2)$ for the rate-matched second code vector $c_2$, a third LLR vector $L_{Dem}(c_3)$ for the rate-matched third code vector $c_3$ based on a receive signal $y_{i,n}$ ($i = 1,2,3$) and for the participating coded bits $c_{i,m}$ ($i = 1,2,3$) by following equation:

$$L_{Dem}(c_{i,m}) = \ln \frac{\Pr\{c_{i,m}=0|y_{i,n},h_i\}}{\Pr\{c_{i,m}=1|y_{i,n},h_i\}} = \ln \frac{\sum_{x\in\mathbb{X},c_{i,m}=0} \exp\left(-\frac{|y_{k,n}-h_i x|^2}{\sigma_n^2}\right)}{\sum_{x\in\mathbb{X},c_{i,m}=1} \exp\left(-\frac{|y_{i,n}-h_i x|^2}{\sigma_n^2}\right)} \qquad (4)$$

For calculating a probability of $c_{i,m} = 0$, all possible symbols $x \in X$ related to $c_{i,m} = 0$ need to be considered. In an equal way for calculating a probability $c_{i,m} = 1$, all possible symbols $x \in X$ related to $c_{i,m} = 1$ respectively need to be considered.

A conventional rate de-matching unit, which is also not shown in Figure 3 for simplification, may be applied for obtaining a first mother codeword $L_{Dem}(b_1)$ from the first LLR vector $L_{Dem}(c_1)$. $L_{Dem}(b_1)$ is equal to $L_{Dem}(c_1)$, when the first code vector codeword $b_1$ has been transmitted, otherwise $L_{Dem}(b_1)$ equals zero.

In a similar way the rate de-matching unit may be applied for obtaining a second mother codeword $L_{Dem}(b_2)$ from the second LLR vector $L_{Dem}(c_2)$ and for obtaining a third mother codeword $L_{Dem}(b_3)$ from the second LLR vector $L_{Dem}(c_3)$.

The first mother codeword $L_{Dem}(b_1)$ may be applied as a first input parameter and a first a priori information $L_a(a_1)$ may be applied as a second input parameter to a first decoding unit DU1 such as a so-called Turbo decoder as described for example in C. Berrou, A. Glavieux, P. Thitimajshima, "Near Shannon limit error-correcting coding and decoding: Turbo-codes. 1," IEEE International Conference on Communications, 1993 (ICC 93), pp.1064-1070 vol.2, 23-26 May 1993 for $N_H$ iterations. In case of a first iteration, the first a priori information $La(a_1)$ is equal to zero.

The second mother codeword $L_{Dem}(b_2)$ may be applied as a first input parameter and a second a priori information $L_a(a_2)$ may be applied as a second input parameter to a second decoding unit DU2 equal to the first decoding unit DU1 for $N_H$ iterations. In case of a first iteration, the second a priori information $L_a(a_2)$ is equal to zero.

For an embodiment of a systematic encoding, a relation between a so-called extrinsic information $L_{Ext}(a_i)$, an LLR vector $L_{Dec}(a_i)$, a mother codeword $L_{Dem}(a_i)$, and an a priori information $L_a(a_i)$ can be given by following equation:

$$L_{Ext}(a_i) = L_{Dec}(a_i) - L_{Dem}(a_i) - L_a(a_i) \qquad (5a)$$

where $i = 1,2$ and a further mother codeword $L_{Dem}(b_i)$ consists at first positions of the mother codeword $L_{Dem}(a_i)$.

The first decoding unit DU1 estimates a first LLR vector $L_{Dec}(a_1)$ for data units such as bits of the first information vector $a_1$. The second decoding unit DU2 estimates a second LLR vector $L_{Dec}(a_2)$ for data units such as bits of the second information vector $a_2$.

For the joint retransmission, the equation (4) may be applied to calculate a third LLR vector $L_{Dem}(c_3)$ for the rate-matched third code vector $c_3$. The rate dematching unit may be applied for calculating a third mother codeword $L_{Dem}(b_3)$ using the third LLR vector $L_{Dem}(c_3)$ as an input parameter. A third decoding unit DU3 estimates a further third LLR vector $L_{Dec}(a_3')$ for data units such as bits of the further third information vector $a_3'$. The third LLR vector $L_{Dec}(a_3')$ contains additional information of the first information vector $a_1$ and the second information vector $a_2$.

For the embodiment of the systematic encoding, a relation between a so-called third extrinsic information $L_{Ext}(a_3')$, the further third LLR vector $L_{Dec}(a_3')$, a further third mother codeword $L_{Dem}(a_3')$, and a so-called third a priori information $L_a(a_3')$ can be given by following equation:

$$L_{Ext}(a_3') = L_{Dec}(a_3') - L_{Dem}(a_3') - L_a(a_3') \qquad (5b)$$

where the third mother codeword $L_{Dem}(b_3)$ consists at first positions of the further third mother codeword $L_{Dem}(a_3')$.

Preferably, a first iteration may be applied by the third decoding unit DU3, after receiving the third a priori information $L_a(a_3')$, when the first decoding unit DU1 and the second decoding unit DU2 have been executed each a first iteration. The third a priori information $L_a(a_3')$ has been generated by a boxplus operation of a third boxplus operation unit BPOU3 on a first extrinsic information $L_{Ext}(a_1)$ and a second extrinsic information $L_{Ext}(a_2)$ and a subsequent interleaving by an interleaving unit IU-RA.

In alternative embodiment, the third a priori information $L_a(a_3')$ is equal to zero for a first iteration applied by the third decoding unit DU3.

When the further third LLR vector $L_{Dec}(a_3')$ is calculated by the third decoding unit DU3 and the third mother codeword $L_{Dem}(b_3)$ and the third a priori information $L_a(a_3')$ are known, the third extrinsic information $L_{Ext}(a_3')$ can be obtained after $N_V$ iterations of Turbo decoding.

The calculated third extrinsic information $L_{Ext}(a_3')$ is provided as an input parameter to a de-interleaving unit DIU of the receiver apparatus RA. The de-interleaving unit DIU may be for example a computer program and a hardware component on which a computer program for performing the de-interleaving is executed, such as a DSP or any other processor. The deinterleaving unit DIU generates further third extrinsic information $L_{Ext}(a_3)$ for example by following equation:

$$L_{Ext}(a_3) = \pi^{-1}(L_{Ext}(a_3'))\qquad(6)$$

where $\pi^{-1}$ is the de-interleaving function corresponding to the interleaving function of the equation (2).

The further third extrinsic information $L_{Ext}(a_3)$ is preferably applied as an input parameter to the first boxplus operation unit BPOU1 and to the second boxplus operation unit BPOU2 in order to fully preserve the soft-information contained in the third information vector $a_3$. The well-known box-plus operation is also known as soft XOR operation (see J. Hagenauer, "Soft is better than Hard", Communications, Coding and Cryptology, vol. 1, pp. 155-171, 1994). Soft XOR of two LLR values $L_1$ and $L_2$ may be calculated by following equation:

$$L_1 \boxplus L_2 = 2\tanh^{-1}\left(\tanh\left(\tfrac{L_1}{2}\right)\cdot\tanh\left(\tfrac{L_2}{2}\right)\right) \approx \operatorname{sign}(L_1)\cdot\operatorname{sign}(L_2)\cdot\min(|L_1|,|L_2|),\qquad(7)$$

where $\boxplus$ denotes bit-wise soft XOR operation and tanh, tanh-' and sign indicate hyperbolic tangent function, inverse hyperbolic tangent function and sign function, respectively.

Assuming that the two initial transmissions are independent and knowing that XOR of punctured codewords is coincident with XOR of turbo codewords and XOR of information words due to a linearity of turbo encoding such as LTE turbo encoding and rate matching (i.e. $a_3 = a_1 \oplus a_2 \leftrightarrow b_3 = b_1 \oplus b_2 \leftrightarrow c_3 = c_1 \oplus c_2$), the second boxplus operation unit BPOU2 calculates a second a priori information $L_a(a_2)$ and the first boxplus operation unit BPOU1 calculates the first a priori information $L_a(a_1)$ by using following equations:

$$L_a(a_1) = L_{Ext}(a_2) \boxplus L_{Ext}(a_3),\qquad(8a)$$

$$L_a(a_2) = L_{Ext}(a_1) \boxplus L_{Ext}(a_3),\qquad(8b)$$

The first mother codeword $L_{Dem}(b_1)$ is provided as a first input parameter and the first a priori information $L_a(a_1)$ is provided as a second input parameter to the first decoding unit DU1 and the first decoding unit DU1 uses the first mother codeword $L_{Dem}(b_1)$ and the first a priori information $L_a(a_1)$ for determining an update of the first LLR vector $L_{Dec}(a_1)$ and of the first extrinsic information $L_{Ext}(a_1)$ as output parameters as known for example from conventional Turbo decoders after $N_V$ iterations of Turbo decoding.

The second mother codeword $L_{Dem}(b_2)$ is provided as a first input parameter and the second a priori information $L_a(a_2)$ is provided as a second input parameter to the second decoding unit DU2 and the second decoding unit DU2 applies the second mother codeword $L_{Dem}(b_2)$ and the second a priori information $L_a(a_2)$ for determining an update of the second LLR vector $L_{Dec}(a_2)$ and of the second extrinsic information $L_{Ext}(a_2)$ as output parameters as known for example from conventional Turbo decoders after $N_V$ iterations of Turbo decoding.

The first extrinsic information $L_{Ext}(a_1)$ and the second extrinsic information $L_{Ext}(a_2)$ are provided to the third boxplus operation unit BPOU3, which calculates the third a priori information $L_a(a_3)$ as an output parameter by using following equation:

$$L_a(a_3) = L_{Ext}(a_1) \boxplus L_{Ext}(a_2),\qquad(9)$$

The third a priori information $L_a(a_3)$ is provided to the interleaving unit IU-RA such as a shift register or a block interleaver (e.g. a matrix is filled row by row and read-out column by column) or a permutation function. The interleaving unit IU-RA generates interleaved third a priori information $L_a(a_3')$ as an output parameter for example according to following equation:

$$L_a(a_3{}') = \pi(L_a(a_3)) \quad (10)$$

The interleaving function $\pi(...)$ is based on a same interleaving function as described with respect to equation (2). This means, that the interleaving unit IU-PA equals the interleaving unit IU-TA.

The third a priori information $\boldsymbol{L_a(a_3')}$ is provided as an input parameter to the third decoding unit DU3.

The decoding units DU1, DU2 and DU3 perform $N_H$ iterations (e.g. equal to 8) for the horizontal code (e.g. turbo code).

The receiver apparatus performs $N_V$ iterations (number of boxplus operations) for the vertical code after a single $N_H = 1$ iteration for a horizontal decoding at the decoding units DU1, DU2, DU3 and obtains final LLR vectors $\boldsymbol{L_{Dec}(a_1)}$, $\boldsymbol{L_{Dec}(a_2)}$ for the first information vector $\boldsymbol{a_1}$ and the second information vector $\boldsymbol{a_2}$.

Finally, a CRC is used to check if the first information vector $\boldsymbol{a_1}$ and the second information vector $\boldsymbol{a_2}$ are correctly decoded for a hard decision of information bits of the first information vector $\boldsymbol{a_1}$ and the second information vector $\boldsymbol{a_2}$.

When the receiver apparatus is able to decode and recover the first information vector $\boldsymbol{a_1}$ and the second information vector $\boldsymbol{a_2}$ by a single joint retransmission, a total number of iterations $N_{TOTAL}$ is for example given by following equation:

$$N_{TOTAL} = 2 \times N_H^0 + 3 \times N_H \times N_V \quad (11)$$

where:

$N_H^0$: iteration number of turbo decoder, when decoding the initial transmissions.

Alternatively, a non-iterative decoding may be applied within the receiver apparatus RA for example by setting $N_V = 1$.

The receiver apparatus RA can be operated with retransmission packets of the joint retransmission having a same redundancy version as the initial packets (chase combining) or can be operated with retransmission packets of the joint retransmission having different redundancy version as the initial packets (incremental redundancy). Chase combining can be considered as a special case of incremental redundancy with a same redundancy pattern as the initial packet.

The embodiments of the invention are not limited to complex-valued modulation symbols such as LTE OFDM symbols. The embodiments may be applied to any further known radio communication standard such as UMTS (UMTS = Universal Mobile Telecommunication Systems), High Speed Packet Access (HSPA), CDMA2000, WiMAX (WiMAX = Worldwide Interoperability for Microwave Access), a IEEE 802.1 family standard (IEEE = Institute of Electrical and Electronics Engineers), or LTE Advanced which applies an automatic repeat request procedure and to any further radio communication technique based on FDM (FDM = Frequency Division Multiplexing), TDM (TDM = Time-Division Multiplexing) and/or SDM (SDM = Space-division Multiplexing).

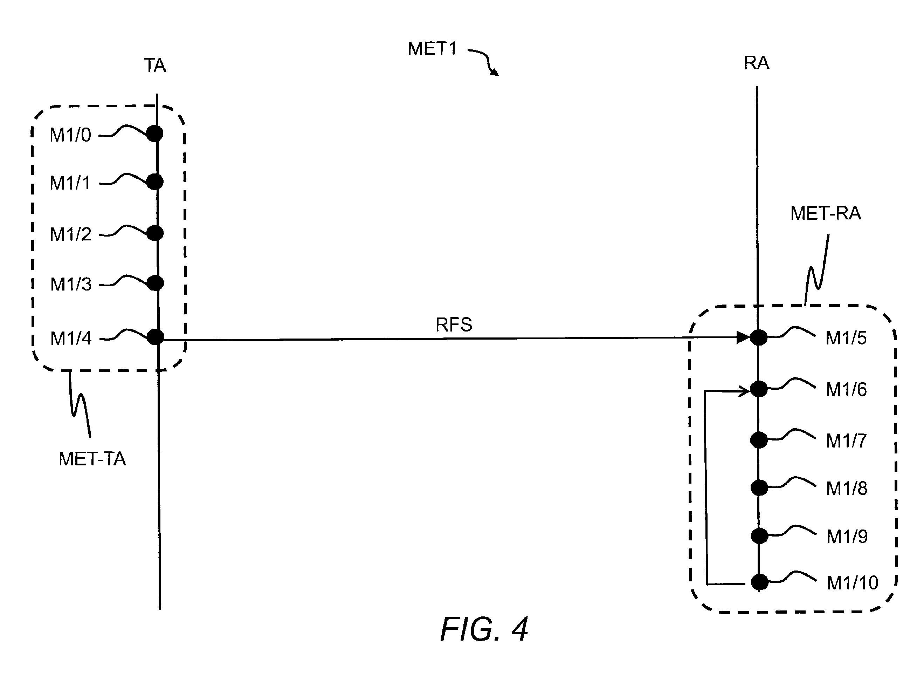

Referring to Figure 4 a flow diagram of a method MET in accordance to a preferred embodiment of the invention is shown. The number of the steps for performing the method MET is not critical, and as can be understood by those skilled in the art, that the number of the steps and the sequence of the steps, e.g. steps M1/9 and M1/10 may be executed in parallel, may vary without departing from the scope of the embodiments of the invention as defined in the appended claims.

Steps M1/0 to M1/4 of the overall method MET1, which are performed by a transmitting apparatus TA are part of a transmission method MET-TA for the transmission of the encoded, interleaved and superimposed third data units in the communication system and steps M1/5 to M1/10 of the overall method MET1, which are performed by a receiver apparatus RA are part of a reception method MET-RA for a reception processing of the encoded, interleaved and superimposed third data units in the communication system. The transmitter apparatus TA may be the transmitter apparatus TA1 or the further transmitter apparatus TA2. The first data units belong to the first information vector $\boldsymbol{a_1}$ and the second data units belong to the second information vector $\boldsymbol{a_2}$. The method MET1 may be alternatively applied for a joint retransmission or a joint transmission of more than two information vectors or of additional redundancy versions of more than two information vectors. The following description is limited for simplification to the case of the joint retransmission or the joint transmission of data units of two information vectors.

In a first optional step M1/0, the data units of the first information vector $a_1$ and/or the second information vector $a_2$ may be interleaved before the next step M1/1.

In a next step M1/1, the superimposing unit SU of the transmitter apparatus TA superimposes the first data units and the second data units for obtaining superimposed data units of the third information vector $a_3$ (see equation (1)).

In a further step M1/2, the interleaving unit IU-TA of the transmitter apparatus TA interleaves the superimposed third data units for obtaining interleaved and superimposed data units of the further third information vector $a_3'$ (see equation (2)).

In a next step M1/3, the encoding unit EU of the transmitter apparatus TA encodes the interleaved and superimposed third data units for obtaining encoded, interleaved and superimposed data units of the third code vector $b_3$ (see description with respect to Figure 1).

Next method steps regarding a processing of the third code vector $b_3$ within the transmitter apparatus TA such as rate-matching for obtaining the rate-matched third code vector $c_3$ and mapping and modulation of the code bits $c_{3,m}$ of the rate-matched third code vector $c_3$ to the third symbols $x_{3,n}$ of a transmission signal RFS such as radio frequency signal are not shown for simplification.

In a further step M1/4, the transmitter apparatus TA transmits the transmission signal RFS for the joint retransmission or the joint transmission to the receiver apparatus RA, which receives the transmission signal RFS in a next step M1/5.

Next method steps regarding a processing of the received transmission signal RFS such as determining the third LLR vector $L_{Dem}(c_3)$ and determining the third mother codeword $L_{Dem}(b_3)$ are not shown for simplification (see description above regarding Figure 1).

In a next step M1/6, the third decoding unit DU3 of the receiver apparatus RA decodes the encoded, interleaved and superimposed data units of the third mother codeword $L_{Dem}(b_3)$ for obtaining interleaved and superimposed data units of the third extrinsic information $L_{Ext}(a_3')$.

In a further step M1/7, the de-interleaving unit DIU of the receiver apparatus RA de-interleaves the interleaved and superimposed data units of the third extrinsic information $L_{Ext}(a_3')$ for obtaining superimposed data units of the further third extrinsic information $L_{Ext}(a_3)$.

In a next step M1/8, the second boxplus operation unit BPOU2 of the receiver apparatus RA calculates the second a priori information $L_a(a_2)$ and the first boxplus operation unit BPOU1 of the receiver apparatus RA calculates the first a priori information $L_a(a_1)$.

In a further step M1/9, the first decoding unit DU1 combines the first a priori information $L_a(a_1)$ with the first mother codeword $L_{Dem}(b_1)$ and performs decoding for recovering error-free the first information vector $a_1$ of the first HARQ process.

In a next step M1/10, the second decoding unit DU2 combines the second a priori information $L_a(a_2)$ with the second mother codeword $L_{Dem}(b_2)$ and performs decoding for recovering error-free the second information vector $a_2$ of the second HARQ process.

Boxplus operations at the boxplus operations units BPOU1, BPOU2, BPOU3 and the passing of extrinsic information to the decoder units DU1, DU2, DU3 are repeated for $N_V$ times.

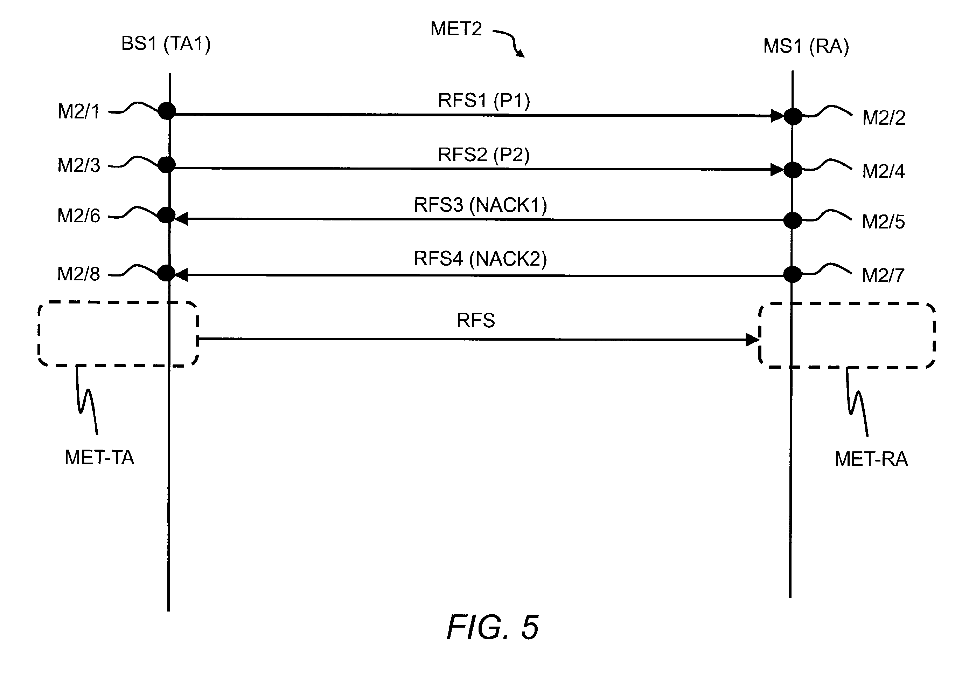

Figure 5 shows schematically a flow diagram of a method MET2 for a communication from a base station BS1 to a mobile station MS1 for a first application of the embodiments of the invention such as a network coded retransmission of two HARQ processes. The base station BS1 may contain the transmission apparatus TA1 and the mobile station MS1 may contain the receiver apparatus RA. The number of the steps for performing the method MET2 is not critical, and as can be understood by those skilled in the art, that the number of the steps and the sequence of the steps may vary without departing from the scope of the embodiments of the invention as defined in the appended claims.

In a first step M2/1, the base station BS1 transmits a first radio frequency signal RFS1, which contains a first data packet P1 (equal to the first information vector $a_1$), to the mobile station MS1, which receives the first radio frequency signals RFS1 in a further step M2/2.

In a next step M2/3, the base station BS1 transmits a second radio frequency signal RFS2, which contains a second data packet P2 (equal to the second information vector $a_2$), to the mobile station MS1, which receives the second radio frequency signals RFS2 in a further step M2/4.

The mobile station MS1 decodes the first data packet P1, detects a decoding failure, and transmits in a next step M2/5 a third radio frequency signal RFS3, which contains a first NACK message NACK1 to the base station BS1, which receives the first NACK message NACK1 in a further step M2/6.

Accordingly, the mobile station MS1 decodes the second data packet P2, detects a decoding failure for the second data packet P2, and transmits in a next step M2/7 a fourth radio frequency signal RFS4, which contains a second NACK message NACK2 to the base station BS1, which receives the second NACK message NACK2 in a further step M2/8.

In further steps the steps of the method MET1 may be executed by the base station BS1 and the mobile station MS1. The base station BS1 executes the transmission method MET-TA and the mobile station MS1 executes the reception method MET-RA.

In an alternative, a similar procedure may be applied, when the mobile station MS1 transmits the first packet P1 and the second packet P2 to the base station BS1.

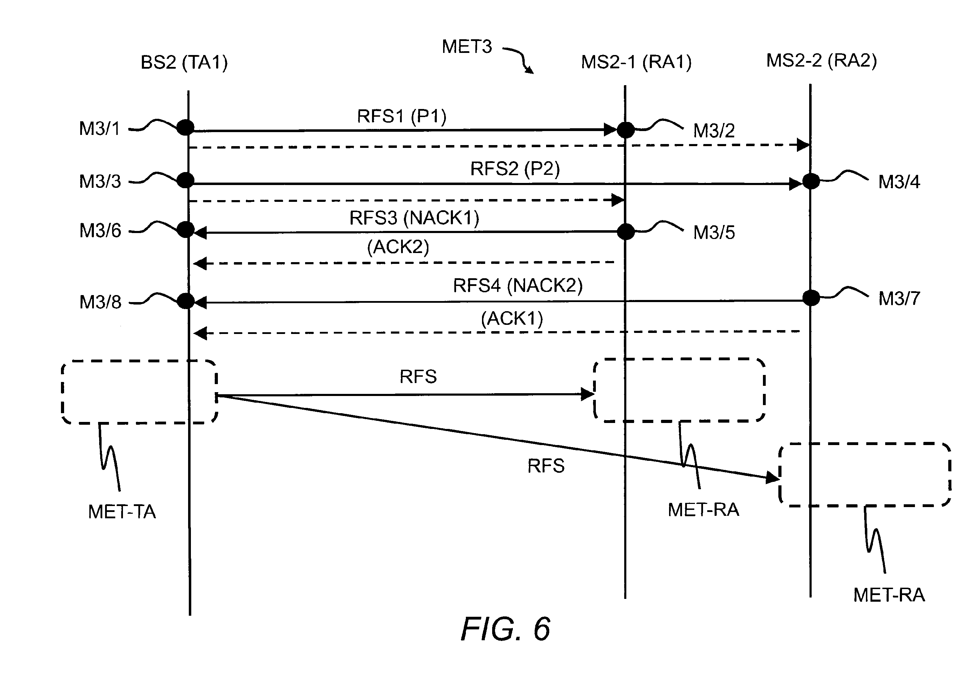

Figure 6 shows schematically a flow diagram of a method MET3 for a communication from a base station BS2 to a first mobile station MS2-1 and to a second mobile station MS2-2 for a second application of the embodiments of the invention such as multi-user ARQ or multicast. The base station BS2 may contain the transmission apparatus TA1, the first mobile station MS2-1 may contain a first receiver apparatus RA1 and the second mobile station MS2-2 may contain a second receiver apparatus RA2. The first receiver apparatus RA1 and the second receiver apparatus RA2 may be for example the receiver apparatus RA, which is shown in Figure 3. The number of the steps for performing the method MET3 is not critical, and as can be understood by those skilled in the art, that the number of the steps and the sequence of the steps may vary without departing from the scope of the embodiments of the invention as defined in the appended claims.

In a first step M3/1, the base station BS2 transmits the first radio frequency signal RFS1, which contains the first data packet P1, to the first mobile station MS2-1, which receives the first radio frequency signals RFS1 in a further step M3/2. In an alternative, the base station BS2 may also transmit the first radio frequency signal RFS1 to the second mobile station MS2-2 by a multicast or broadcast (indicated by a first dotted arrow in Figure 6).

In a next step M3/3, the base station BS2 transmits the second radio frequency signal RFS2, which contains the second data packet P2, to the second mobile station MS2-2, which receives the second radio frequency signals RFS2 in a further step M3/4. In accordance to the above alternative, the base station BS2 may also transmit the second radio frequency signal RFS2 to the first mobile station MS2-1 by the multicast or the broadcast (indicated by a second dotted arrow in Figure 6).

The first mobile station MS2-1 decodes the first data packet P1, detects a decoding failure, and transmits in a next step M3/5 the third radio frequency signal RFS3, which contains the first NACK message NACK1 to the base station BS2, which receives the first NACK message NACK1 in a further step M3/6. In accordance to the above alternative, the first mobile station MS2-1 may decode error-free the second data packet P2 and may optionally transmit a second acknowledgement ACK2 to the base station BS2 (indicated by a third dotted arrow in Figure 6).

The second mobile station MS2-2 decodes the second data packet P2, detects a decoding failure for the second data packet P2, and transmits in a next step M3/7 the fourth radio frequency signal RFS4, which contains the second NACK message NACK2 to the base station BS2, which receives the second NACK message NACK2 in a further step M3/8. In accordance to the above alternative, the second mobile station MS2-2 may decode error-free the first data packet P1 and may transmit optionally a first acknowledgement ACK1 to the base station BS2 (indicated by a fourth dotted arrow in Figure 6).

In further steps the steps of the method MET1 may be executed by the base station BS2, the first mobile station MS2-1 and the second mobile station MS2-2. The base station BS2 executes the transmission method MET-TA, the first mobile station MS2-1 executes the reception method MET-RA for recovering error-free the first data packet P1 with help of the joint retransmission and the second mobile station MS2-2 executes the reception method MET-RA for recovering error-free the second data packet P2 with help of the joint retransmission.

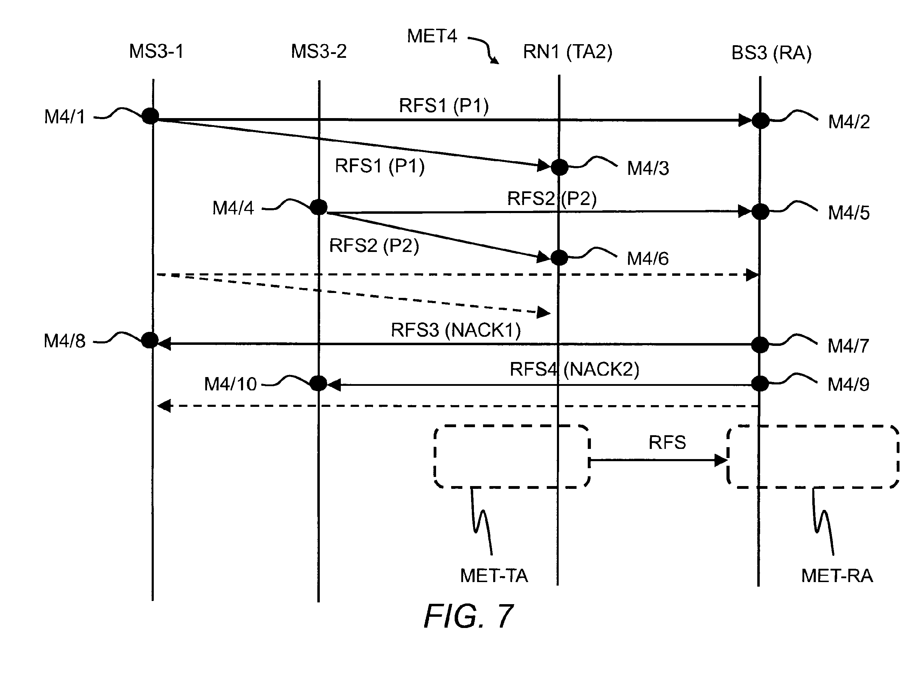

Figure 7 shows schematically a flow diagram of a method MET4 for a communication from a first mobile station MS3-1 and a second mobile station MS3-2 via a relay network node RN1 to a base station BS3 for a third application of the embodiments of the invention such as for a cooperative uplink relay. The first mobile station MS3-1 and the second mobile station MS3-2 may contain any familiar transmission apparatus, which is known to a person skilled in the art. The relay network node RN1 may contain the transmission apparatus TA2 and the base station BS3 may contain the receiver apparatus RA. The number of the steps for performing the method MET4 is not critical, and as can be understood by those skilled in the art, that the number of the steps and the sequence of the steps may vary without departing from the scope of the embodiments of the invention as defined in the appended claims.

In a first step M4/1, the first mobile station MS3-1 transmits the first radio frequency signal RFS1, which contains the first data packet P1, to the base station BS3, which receives the first radio frequency signals RFS1 in a further step M4/2. The first radio frequency signals RFS1 are also received at the relay network node RN1 in a next step M4/3.

In a next step M4/4, the second mobile station MS3-2 transmits the second radio frequency signal RFS2, which contains the second data packet P2, to the base station BS3, which receives the second radio frequency signals RFS2 in a further step M4/5. The second radio frequency signals RFS2 are also received at the relay network node RN1 in a next step M4/6.

The base station BS3 decodes the first data packet P1, detects a decoding failure, and transmits in a next step M4/7 the third radio frequency signal RFS3, which contains the first NACK message NACK1 to the first mobile station MS3-1, which receives the first NACK message NACK1 in a further step M4/8.

The base station BS3 decodes the second data packet P2, detects a decoding failure for the second data packet P2, and transmits in a next step M4/9 the fourth radio frequency signal RFS4, which contains the second NACK message NACK2 to the base station BS2, which receives the second NACK message NACK2 in a further step M4/10.

According to an alternative embodiment (indicated in Figure 7 by dashed arrows), the first mobile station MS3-1 may transmit the second radio frequency signal RFS2 to the base station BS3 and the base station BS3 may transmit the fourth radio frequency signal RFS4 to the first mobile station MS3-1.

The relay network node RN1 may eavesdrop to NACK messages. When the relay network node RN1 catches the first NACK message NACK1 and the second NACK message NACK2 and is able to decode and recover error-free the first data packet P1 and the second data packet P2, further steps of the method MET1 may be executed by the relay network node RN1 and the base station BS3. The relay network node RN1 executes the transmission method MET-TA and the base station BS3 executes the reception method MET-RA for recovering error-free the first data packet P1 and the second data packet P2 with help of the joint retransmission.

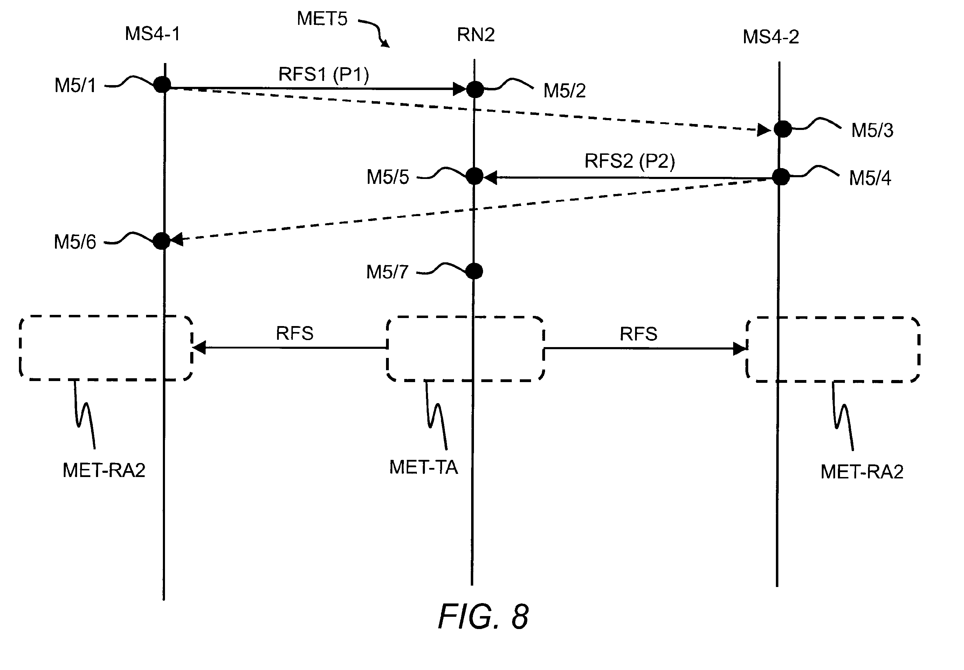

Figure 8 shows schematically a flow diagram of a method MET5 for a communication from a first mobile station MS4-1 via a relay network node RN2 to a second mobile station MS4-2 for a fourth application of the embodiments of the invention in a two-way relay. The relay network node RN2 may contain the transmission apparatus TA2, the first mobile station MS4-1 may contain the first receiver apparatus RA1 and the second mobile station MS4-2 may contain the second receiver apparatus RA2. The first receiver apparatus RA1 and the second receiver apparatus RA2 may be for example the receiver apparatus RA, which is shown in Figure 3. The number of the steps for performing the method MET5 is not critical, and as can be understood by those skilled in the art, that the number of the steps and the sequence of the steps may vary without departing from the scope of the embodiments of the invention as defined in the appended claims.

In a first step M5/1, the first mobile station MS4-1 transmits the first radio frequency signal RFS1, which contains the first data packet P1, to the relay network node RN2, which receives the first radio frequency signals RFS1 in a further step M5/2. The first radio frequency signal RFS1 is further intercepted by the second mobile station MS4-2 in a step M5/3 (see dashed arrow in Figure 8). The second mobile station MS4-2 receives and demodulates the first radio frequency signal RFS1 transmitted by the first mobile station MS4-1, performs decoding using a decoding unit such as the first or the second decoding unit DU1, DU2 and obtains a first incorrect estimate of the first data packet P1. Optionally a negative acknowledgement may be transmitted from the second mobile station MS4-2 to the relay node RN2 and/or to the second mobile station MS4-2.

In a further step M5/4, the second mobile station MS4-2 transmits the second radio frequency signal RFS2, which contains the second data packet P2, to the relay network node RN2, which receives the second radio frequency signals RFS2 in a next step M5/5. The second radio frequency signal RFS2 is further intercepted by the first mobile station MS4-1 in a further M5/6 (see further dashed arrow in Figure 8). The first mobile station MS4-1 receives and demodulates the second radio frequency signal RFS2 transmitted by the second mobile station MS4-2, performs decoding using a decoding unit such as the first or the second decoding unit DU1, DU2 and obtains a first incorrect estimate of the second data packet P2. Optionally a negative acknowledgement may be transmitted from the first mobile station MS4-1 to the relay node RN2 and/or to the second mobile station MS4-2.

In a next step M5/7, the relay network node RN2 decodes and recovers error-free the first data packet P1 and decodes and recovers error-free the second data packet P2. In further steps of the method MET5 corresponding steps of the method MET1 may be executed by the relay network node RN2, the first mobile station MS4-1 and the second mobile station MS4-2. The relay network node RN2 executes the steps of the transmission method MET-TA, the first mobile station MS4-1 executes steps of a reception method MET-RA for recovering error-free the second data packet P2 with help of the joint transmission and the second mobile station MS4-2 executes the steps of the reception method MET-RA for recovering error-free the first data packet P1 with help of the joint transmission.

The reception method MET-RA2 differs from the reception method MET-RA in that the first mobile station MS4 (and likewise the second mobile station MS4-2) receives and demodulates the radio frequency signal RFS transmitted by the relay node RN2 and may apply following steps: calculating of the second extrinsic information $L_{Ext}(a_2)$ and generation of the third extrinsic information $L_{Ext}(a_3{'})$ by an adapted third boxplus operation unit BPOU3 (the first information vector_$a_1$ is perfectly known at the first mobile station MS4-1), interleaving of the third extrinsic information $L_{Ext}(a_3{'})$ obtaining the third a priori information $L_a(a_3{'})$, decoding by means of the third decoding unit DU3 to obtain the third extrinsic information $L_{Ext}(a_3{'})$ de-interleaving by means of the de-interleaving unit DIU to obtain the further third extrinsic information $L_{Ext}(a_3)$, and generating of the second a priori information $L_a(a_2)$ by the adopted third boxplus operation unit BPOU3 using the further third extrinsic information $L_{Ext}(a_3)$. Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the embodiments of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements of the transmitter apparatus and the receiver apparatus, which are shown in Figures 9 and 10, including any functional blocks labeled as "means", "means for composing", "means for transmitting", "means for receiving", "means for estimating", etc., may be provided through the use of dedicated hardware, such as "a composer", "a transmitter" , "a receiver" , "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A transmission method (MET-TA) for a joint transmission of first data units and at least second data units in a communication system, said first data units are applied for a transmission with respect to a first initial transmission of a first data volume, said at least second data units are applied for a transmission with respect to a second initial transmission of at least a second data volume, said transmission method (MET-TA) comprising the steps of:

   - superimposing (M1/1) said first data units with said at least second data units for obtaining superimposed third data units,
   - interleaving (M1/2) said superimposed third data units for obtaining interleaved and superimposed third data units,
   - encoding (M1/3) said interleaved and superimposed third data units for obtaining encoded, interleaved and superimposed third data units, and
   - transmitting (M1/4) said encoded, interleaved and superimposed third data units.

2. Method (MET-TA) according to claim 1, wherein said transmission method (MET-TA) further comprises the step of interleaving (M1/0) said first data units with a first permutation and/or said at least second data units with a second permutation before said superimposing step (M1/1).

3. Method (MET-TA, MET2) according to any of the preceding claims, wherein said first initial transmission is erroneously received at a receiver apparatus (RA), wherein said at least second initial transmission is erroneously received at said receiver apparatus (RA) and wherein said encoded, interleaved and superimposed third data units are transmitted to said receiver apparatus (RA).

4. Method (MET-TA, MET5) according to claim 1 or claim 2, wherein said first initial transmission is provided by a first network node (MS4-1), wherein said at least second initial transmission is provided by at least a second network node (MS4-2), wherein said first initial transmission and said at least second initial transmission are error-free received at a relay network node (RN2), and wherein said encoded, interleaved and superimposed third data units are transmitted from said relay network node (RN2) to said first network node (MS4-1) for an error-free decoding of said at least second data volume at said first network node (MS4-1) and to said at least second network node (MS4-2) for an error-free decoding of said first data volume at said at least second network node (MS4-2).

5. Method (MET-TA, MET3) according to claim 1 or claim 2, wherein said first initial transmission is erroneously received at a first receiver apparatus (RA1), wherein said at least second initial transmission is erroneously received at at least a second receiver apparatus (RA2) and wherein said encoded, interleaved and superimposed third data units are transmitted to said first receiver apparatus (RA1) and said at least second receiver apparatus (RA2).

6. Method (MET-TA, MET4) according to claim 1 or claim 2, wherein said first initial transmission is provided by a first network node (MS3-1), wherein said at least second initial transmission is provided by said first network node (MS3-1) or by at least a second network node (MS3-2), wherein said first initial transmission and said at least second initial transmission are erroneously received at a third network node (BS), wherein said first initial transmission and said at least second initial transmission are error-free received at a relay network node (RN1), and wherein said encoded, interleaved and superimposed third data units are transmitted from said relay network node (RN1, RN2) to said third network node (BS).

7. Method (MET-TA) according to any of the preceding claims, wherein said superimposing step (M1/1) is a modulo-2 addition.

8. Method (MET-TA) according to any of the preceding claims, wherein said first data volume and said at least second data volume are either of the following: data packets, data frames.

9. A reception method (MET-RA) for a joint transmission of first data units and at least second data units in a communication system, said first data units are applied for a transmission with respect to a first initial transmission of a first data volume, said at least second data units are applied for a transmission with respect to a second initial transmission of at least a second data volume, said reception method (MET-RA) comprising the steps of:

   - receiving (M1/5) encoded, interleaved and superimposed third data units being generated by superimposing said first data units with said at least second data units, by interleaving said superimposed third data units and by encoding said interleaved and superimposed third data units,
   - decoding (M1/6) said encoded, interleaved and superimposed third data units for obtaining said interleaved and superimposed third data units,
   - de-interleaving (M1/7) said interleaved and superimposed third data units for obtaining said superimposed third data units,
   - performing a joint decoding (M1/9) of said superimposed third data units and of data units of said first initial transmission or of said at least second initial transmission for recovering error-free said first data volume of said first initial transmission, and/or
   - performing a joint decoding (M1/10) of said superimposed third data units and data units of said first initial transmission or of said at least second initial transmission for recovering error-free said at least second data volume of said at least second initial transmission.

10. A computer program having a program code for performing one of the methods of any of the preceding claims, when the computer program is executed on a computer or processor.

11. A transmitter apparatus (TA) for a joint transmission of first data units and at least second data units in a communication system, said first data units are applied for a transmission with respect to a first initial transmission of a first data volume, said at least second data units are applied for a transmission with respect to a second initial transmission of at least a second data volume, said transmitter apparatus (TA) comprising:

   - means (SU) for superimposing said first data units with said at least second data units for obtaining superimposed third data units,

- means (IU-TA) for interleaving said superimposed third data units for obtaining interleaved and superimposed third data units,
- means (EU) for encoding said interleaved and superimposed third data units for obtaining encoded, interleaved and superimposed third data units, and
- means for transmitting said encoded, interleaved and superimposed third data units.

12. A receiver apparatus (RA) for a joint transmission of first data units and at least second data units in a communication system, said first data units are applied for a transmission with respect to a first initial transmission of a first data volume, said at least second data units are applied for a further transmission with respect to a second initial transmission of at least a second data volume, said receiver apparatus (RA) comprising:

- means for receiving encoded, interleaved and superimposed third data units being generated by superimposing said first data units with said at least second data units, by interleaving said superimposed third data units and by encoding said interleaved and superimposed third data units,
- means (DU3) for decoding said encoded, interleaved and superimposed third data units for obtaining said interleaved and superimposed third data units,
- means (DIU) for de-interleaving said interleaved and superimposed third data units for obtaining said superimposed third data units,
- means (DU1, BPOU1) for performing a joint decoding of said superimposed third data units and of data units of said first initial transmission or of said at least second initial transmission for recovering error-free said first data volume of said first initial transmission, and/or
- means (DU2, BPOU2) for performing a joint decoding of said superimposed third data units and of data units of said first initial transmission or of said at least second initial transmission for recovering error-free said at least second data volume of said at least second initial transmission.

**Amended claims in accordance with Rule 137(2) EPC.**

1. A transmission method (MET-TA) for a joint transmission of first data units and at least second data units in a communication system, said first data units are applied for a transmission with respect to a first initial transmission of a first data volume, said at least second data units are applied for a transmission with respect to a second initial transmission of at least a second data volume, said transmission method (MET-TA) comprising the steps of:

- superimposing (M1/1) said first data units with said at least second data units for obtaining superimposed third data units,
- interleaving (M1/2) by an interleaving unit (IU-TA) said superimposed third data units for obtaining interleaved and superimposed third data units,
- encoding (M1/3) by an encoding unit (EU) said interleaved and superimposed third data units for obtaining encoded, interleaved and superimposed third data units, and
- transmitting (M1/4) said encoded, interleaved and superimposed third data units.

2. Method (MET-TA) according to claim 1, wherein said transmission method (MET-TA) further comprises the step of interleaving (M1/0) said first data units with a first permutation and/or said at least second data units with a second permutation before said superimposing step (M1/1).

3. Method (MET-TA, MET2) according to any of the preceding claims, wherein said first initial transmission, said at least second initial transmission and said encoded, interleaved and superimposed third data units are transmitted from a transmitter apparatus (TA1) to a receiver apparatus (RA).

4. Method (MET-TA, MET4) according to claim 1 or claim 2, wherein said first initial transmission is provided by a first network node (MS3-1) to a third network node (BS), wherein said at least second initial transmission is provided by said first network node (MS3-1) or by at least a second network node (MS3-2) to said third network node (BS), and wherein said encoded, interleaved and superimposed third data units are transmitted from a relay network node (RN1, RN2) to said third network node (BS).

5. Method (MET-TA) according to any of the preceding claims, wherein said superimposing step (M1/1) is a modulo-2 addition.

**6.** Method (MET-TA) according to any of the preceding claims, wherein said first data volume and said at least second data volume are either of the following: data packets, data frames.

**7.** A reception method (MET-RA) for a joint transmission of first data units and at least second data units in a communication system, said first data units are applied for a transmission with respect to a first initial transmission of a first data volume, said at least second data units are applied for a transmission with respect to a second initial transmission of at least a second data volume, said reception method (MET-RA) comprising the steps of:

- receiving (M2/2, M4/2, M2/4, M4/5) said first initial transmission and said at second initial transmission,
- receiving (M1/5) encoded, interleaved and superimposed third data units being generated by superimposing said first data units with said at least second data units, by interleaving said superimposed third data units and by encoding said interleaved and superimposed third data units,
- decoding (M1/6) said encoded, interleaved and superimposed third data units for obtaining said interleaved and superimposed third data units,
- de-interleaving (M1/7) said interleaved and superimposed third data units for obtaining said superimposed third data units,
- performing a joint decoding (M1/9) of said superimposed third data units and of data units of said first initial transmission or of said at least second initial transmission for recovering error-free said first data volume of said first initial transmission, and
- performing a joint decoding (M1/10) of said superimposed third data units and data units of said first initial transmission or of said at least second initial transmission for recovering error-free said at least second data volume of said at least second initial transmission.

**8.** A computer program having a program code for performing one of the methods of any of the preceding claims, when the computer program is executed on a computer or processor.

**9.** A transmitter apparatus (TA1, TA2) for a joint transmission of first data units and at least second data units in a communication system, said first data units are applied for a transmission with respect to a first initial transmission of a first data volume, said at least second data units are applied for a transmission with respect to a second initial transmission of at least a second data volume, said transmitter apparatus (TA) comprising:

- means (SU) for superimposing said first data units with said at least second data units for obtaining superimposed third data units,
- an interleaving unit (IU-TA) for interleaving said superimposed third data units for obtaining interleaved and superimposed third data units,
- an encoding unit (EU) for encoding said interleaved and superimposed third data units for obtaining encoded, interleaved and superimposed third data units, and
- means for transmitting said encoded, interleaved and superimposed third data units.

**10.** A receiver apparatus (RA) for a joint transmission of first data units and at least second data units in a communication system, said first data units are applied for a transmission with respect to a first initial transmission of a first data volume, said at least second data units are applied for a further transmission with respect to a second initial transmission of at least a second data volume, said receiver apparatus (RA) comprising:

- means for receiving said first initial transmission and said at second initial transmission,
- means for receiving encoded, interleaved and superimposed third data units being generated by superimposing said first data units with said at least second data units, by interleaving said superimposed third data units and by encoding said interleaved and superimposed third data units,
- means (DU3) for decoding said encoded, interleaved and superimposed third data units for obtaining said interleaved and superimposed third data units,
- means (DIU) for de-interleaving said interleaved and superimposed third data units for obtaining said superimposed third data units,
- means (DU1, BPOU1) for performing a joint decoding of said superimposed third data units and of data units of said first initial transmission or of said at least second initial transmission for recovering error-free said first data volume of said first initial transmission, and
- means (DU2, BPOU2) for performing a joint decoding of said superimposed third data units and of data units of said first initial transmission or of said at least second initial transmission for recovering error-free said at least second data volume of said at least second initial transmission.

EP 2 733 881 A1

*FIG. 1*

FIG. 2

FIG. 3

FIG. 4

*FIG. 5*

FIG. 6

FIG. 7

*FIG. 8*

MS4-2

M5/3

M5/4

RFS2 (P2)

MET-RA2

RFS

M5/2

RN2

MET5

RFS1 (P1)

M5/5

M5/7

MET-TA

RFS

MS4-1

M5/1

M5/6

MET-RA2

Europäisches
Patentamt

European
Patent Office

Office européen
des brevets

# EUROPEAN SEARCH REPORT

Application Number

EP 12 30 6422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/220644 A1 (REZNIK ALEXANDER [US] ET AL) 2 September 2010 (2010-09-02) * figures 1,3,4,6 * * paragraph [0034] - paragraph [0077] * | 1-12 | INV. H04L1/00 H04L1/18 |
| X | US 2012/201192 A1 (HONG SUNGKWON [KR] ET AL) 9 August 2012 (2012-08-09) * figures 1-3,6,7,9,10 * * paragraph [0087] * | 1-6,8-12 | |
| X | WO 2010/117646 A1 (MOTOROLA INC [US]; ARULSELVAN NAVEEN [IN]) 14 October 2010 (2010-10-14) * figures 1,6 * * page 11, line 1 - page 14, line 2 * * claim 1 * | 1-3,5, 7-12 | |
| X | CHRISTOPH HAUSL ET AL: "Iterative Network and Channel Decoding for the Two-Way Relay Channel", COMMUNICATIONS, 2006. ICC '06. IEEE INTERNATIONAL CONFERENCE ON, IEEE, PI, 1 June 2006 (2006-06-01), pages 1568-1573, XP031025284, ISBN: 978-1-4244-0354-7 * section III . Turbo Network Coding * | 1-12 | TECHNICAL FIELDS SEARCHED (IPC) H04L |

The present search report has been drawn up for all claims

| Place of search | Date of completion of the search | Examiner |
|---|---|---|
| The Hague | 14 May 2013 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 6422

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2013

| Patent document cited in search report | | Publication date | Patent family member(s) | | Publication date |
|---|---|---|---|---|---|
| US 2010220644 | A1 | 02-09-2010 | EP | 2399357 A2 | 28-12-2011 |
| | | | TW | 201126953 A | 01-08-2011 |
| | | | TW | 201215021 A | 01-04-2012 |
| | | | US | 2010220644 A1 | 02-09-2010 |
| | | | WO | 2010096648 A2 | 26-08-2010 |
| US 2012201192 | A1 | 09-08-2012 | KR | 20110037422 A | 13-04-2011 |
| | | | US | 2012201192 A1 | 09-08-2012 |
| | | | WO | 2011043594 A2 | 14-04-2011 |
| WO 2010117646 | A1 | 14-10-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. BERROU ; A. GLAVIEUX ; P. THITIMAJSHIMA.** Near Shannon limit error-correcting coding and decoding: Turbo-codes. 1. *IEEE International Conference on Communications,* 23 May 1993, vol. 2, 1064-1070
- Multiplexing and Channel Coding. *3GPP TS 36.212 V9.2.0,* June 2010
- Multiplexing and Channel Coding. *TS 36.212 V9.2.0,* June 2010

- **J. HAGENAUER.** Soft is better than Hard. *Communications, Coding and Cryptology,* 1994, vol. 1, 155-171
- **C. BERROU ; A. GLAVIEUX ; P. THITIMAJSHIMA.** Near Shannon limit error-correcting coding and decoding: Turbo-codes. 1. *IEEE International Conference on Communications, 1993 (ICC 93,* 23 May 1993, vol. 2, 1064-1070